# EUROPÄISCHE PATENTSCHRIFT

(11) **EP 2 269 296 B1**
(45) Veröffentlichungstag und Bekanntmachung des Hinweises auf die Patenterteilung: **02.11.2011**
(21) Anmeldenummer: 09732633.4
(22) Anmeldetag: 15.04.2009
(51) Int. Cl.: H02P 3/14, H02P 3/12, H02H 3/24, H02H 7/08

(54) **ANSTEUERSCHALTUNG FÜR EINEN GLEICHSTROMMOTOR MIT EINER H-BRÜCKE UND EINER MOTORBREMSSCHALTUNG**
DRIVE CIRCUIT FOR A DC MOTOR, COMPRISING AN H-BRIDGE AND A MOTOR BRAKING CIRCUIT
CIRCUIT DE CONTROLE POUR UN MOTEUR A COURANT CONTINU AVEC UN PONT EN H ET UN CIRCUIT DE FREIN MOTEUR

(30) Priorität: 17.04.2008 DE 102008001233
(43) Veröffentlichungstag der Anmeldung: 05.01.2011
(73) Patentinhaber: Huf Hülsbeck & Fürst GmbH & Co. KG, 42551 Velbert (DE)
(72) Erfinder: HIRCHE, Mark, 42549 Velbert (DE); FINZEL, Jörg, 40699 Erkrath (DE); GORNIK, Christian, 45549 Sprockhövel (DE); ZECH, Michael, 42553 Velbert (DE); USELLI, Gianni, 42553 Velbert (DE)
(74) Vertreter: Zenz
(86) Internationale Anmeldenummer: PCT/EP2009/054469
(87) Internationale Veröffentlichungsnummer: WO 2009/127660

(56) Entgegenhaltungen:
- DE-A1- 3 027 729
- DE-A1- 10 222 538
- US-A- 4 767 970

## Beschreibung

Die Erfindung betrifft eine Ansteuerschaltung für einen Antriebsmotor eines Stellantriebs in einem Kraftfahrzeug, insbesondere eines Stellantriebs einer Lenkvorrichtung, bei dem ein von dem Motor angetriebenes Getriebebauteil gegen einen mechanischen Endanschlag bewegbar ist, wobei der Motor ein Gleichstrommotor mit zwei Anschlüssen ist, wobei die Ansteuerschaltung vier von einer Steuerschaltung angesteuerte Schaltbauelemente aufweist, wobei ein erstes Schaltbauelement einen ersten Anschluss des Motors mit einer Versorgungsspannung, ein zweites Schaltbauelement den ersten Anschluss des Motors mit Masse, ein drittes Schaltbauelement einen zweiten Anschluss des Motors mit der Versorgungsspannung und ein viertes Schaltbauelement den zweiten Anschluss des Motors mit Masse koppelt, wobei die Schaltbauelemente jeweils einen Steueranschluss aufweisen und bei fehlender Ansteuerung des Steueranschlusses durch eine Steuerspannung ausgeschaltet sind und wobei die Steuerschaltung eine Steuerspannung an die Steueranschlüsse des ersten und des vierten Schaltbauelements anlegt, um den Motor in einer ersten Richtung anzutreiben, und die Steuerschaltung die Steuerspannung an die Steueranschlüsse des zweiten und des dritten Schaltbauelements anlegt, um den Motor in einer entgegengesetzten, zweiten Richtung anzutreiben.

Eine Ansteuerschaltung der genannten Art wird in dem Kraftfahrzeug beispielsweise für einen Gleichstromantriebsmotor einer elektronischen Lenkungsverriegelung (ELV) verwendet und dient hier dazu, über ein Getriebe einen Sperrbolzen zu bewegen, der dann zum Zwecke der Verriegelung der Lenkung in eine Ausnehmung (Nut) einrastet, die mit der Lenkspindel fest verbunden ist. Zum Entriegeln wird der Motor in der entgegengesetzten Richtung angetrieben und zieht dann den Sperrbolzen wieder aus der Nut heraus, wodurch die Lenksäule freigegeben wird. Der Sperrbolzen wird somit über das Getriebe zwischen einer Verriegelungsposition und einer Entriegelungsposition hin- und herbewegt. Das Erreichen der jeweiligen Endpositionen des Sperrbolzens wird mit Sensoren überwacht, die entweder die Bewegung des Sperrbolzens selbst oder die Bewegung eines den Sperrbolzen antreibenden Getriebebauteils erfassen. Wird während eines Bewegens des Sperrbolzens in der Entriegelungsrichtung mit diesen Sensoren beispielsweise erfasst, dass sich ein mit dem Motor einerseits und mit dem Sperrbolzen andererseits gekoppeltes Getriebebauteil in einer Position befindet, die der Entriegelungsposition des Sperrbolzens entspricht, so wird üblicherweise der Motorantrieb abgeschaltet, um die Bewegung des Getriebes und des Sperrbolzens zu beenden. Bei einigen Ausführungsformen würde eine Weiterbewegung des Getriebes über diesen Abschaltpunkt hinaus schließlich dazu führen, dass das Getriebe, d. h. ein Getriebebauteil, gegen einen Endanschlag bewegt wird, der eine Weiterbewegung mechanisch verhindert. Ein Antreiben des Getriebes durch den Motor derart, dass der Motor das Getriebe auch dann noch antreibt, wenn dieses bereits den Endanschlag erreicht hat, könnte zu einem Verklemmen des Getriebes oder einer Zerstörung eines Getriebebauteils führen. Dies ist somit zu vermeiden.

Bei einer Ansteuerschaltung der eingangs genannten Art kann ein Weiterbewegen des Motorantriebs über das Erreichen des Anschlags hinaus dadurch vermieden werden, dass der Motor rechtzeitig vor Erreichen dieses Anschlags abgeschaltet wird, so dass ein trägheitsbedingtes Nachlaufen des Motors und somit des Getriebes nicht zum Erreichen der Anschlagsposition ausreicht. Dies setzt jedoch eine Konstruktion des Getriebes voraus, die diesen Nachlaufweg einkalkuliert und einen ausreichenden Bewegungsspielraum erlaubt.

Bei einer anderen herkömmlichen Ansteuerschaltung für den Motor, bei der mechanische Relais mit Umschaltkontakten verwendet werden, ist ein schnelles Abbremsen des Motors dadurch möglich, dass die Motoranschlüsse jeweils mit den Mittelkontakten der Umschaltkontakte verbunden werden, wobei der Umschaltkontakt dann zwischen der Versorgungsspannung und Masse wechselt und im Ruhezustand auf Masse liegt, wobei dann, wenn sich beide Umschaltkontakte im Ruhezustand befinden, beide Motoranschlüsse auf Masse (oder ein anderes gemeinsames Potential) gelegt werden, was zu einem sofortigen Abbremsen des Motors durch die vom Fließen eines Kurzschlussstroms bewirkten Lorenzkräfte führt.

Werden jedoch für die Schaltbauelemente, die die Motoranschlüsse mit der Versorgungsspannung oder mit Masse koppeln, elektronische Bauelemente eingesetzt, wie beispielsweise Bipolartransistoren oder Leistungs-FETs, so ist ein derartiges Abbremsen nicht möglich, da diese elektronischen Bauelemente keine dem Umschaltkontakt entsprechende Funktionalität zur Verfügung stellen.

Die Druckschrift DE 30 27 729 A1 beschreibt die herkömmliche H-Brücke zum Ansteuern eines Motors in zwei entgegengesetzten Drehrichtungen. Außerdem beschreibt die Di die Möglichkeit des schnellen Abbremsens durch Herstellen einer Kurzschlussverbindung über zwei mit dem gleichen Spannungsversorgungsanschluss gekoppelte Schaltbauelemente der H-Brücke. Mit dem Problem des Ausfalls der Spannungsversorgung befasst sich diese Druckschrift jedoch nicht. Bei Stromausfall würde das beschriebene Bremsen nicht mehr funktionieren.

Die Druckschrift US 4 747 970 A befasst sich mit dem Problem des Ausfalls einer Spannungsversorgung bei Motorantrieben für Abwickel- und Aufwickelteller einer Bandmaschine. Bei Ausfall der Spannungsversorgung wird ein Speicherkondensator zur Versorgung eines Operationsverstärkers verwendet, der wiederum einen FET einschaltet. Über zwei Gleichrichterdioden 1st der FET mit jeweils einem Abschluss der zwei Motoren verbunden, so dass sich über Masse eine Kurzschluss-Verbindung zum Abbremsen des Motors ergibt. Im Gegensatz zur Erfindung werden hier aber nicht beide Schalteinrichtungen der H-Brücke über Masse kurzgeschlossen, stattdessen wird einseparater Schaltungszweig zum Abbremsen eingeschaltet

Aufgabe der Erfindung ist es daher, eine Motorabbremsung auch bei Verwendung einer Ansteuerschaltung der eingangs genannten Art zu ermöglichen.

Diese Aufgabe wird erfindungsgemäß durch eine Ansteuerschaltung mit den Merkmalen des Anspruchs 1 gelöst. Die Ansteuerschaltung der eingangs genannten Art ist erfindungsgemäß **dadurch gekennzeichnet, dass** eine Motorbremsschaltung vorgesehen ist, die die Steueranschlüsse des zweiten und des vierten Schaltbauelements vorübergehend mit einer Steuerspannung zum Einschalten der Schaltbauelemente versorgt, sobald die Versorgungsspannung ausfällt, wobei die Steuerspannung aus einem Energiespeicher gewonnen wird, der während des Anliegens der Versorgungsspannung aufgeladen wird. Im Falle eines Ausfalls der Versorgungsspannung stellt nämlich die Steuerschaltung nicht mehr die für die vier Schaltbauelemente vorgesehenen Steuerspannungen zur Verfügung, so dass sämtliche vier Schaltbauelemente ausgeschaltet würden, woraufhin der Motor sich im Leerlauf trägheitsbedingt weiter drehen würde, sofern er vor dem Ausfall der Versorgungsspannung in Bewegung gewesen wäre. Selbstverständlich ist der Ausfall der Versorgungsspannung besonders dann kritisch, wenn sich der Motor bereits in der Nähe der Endposition befindet. Bei der Verwendung der erfindungsgemäßen Motorbremsschaltung führt der Ausfall der Versorgungsspannung jedoch dazu, dass ein zuvor aufgeladener Energiespeicher die für eine vorübergehende Bereitstellung einer Steuer-spannung erforderliche Energie liefert, wobei diese Steuerspannung den Steueranschlüssen des zweiten und vierten Schaltbauelements zur Verfügung gestellt wird, so dass die beiden Anschlüsse des Motors mit Masse gekoppelt werden. Selbstverständlich können auch die Versorgungsspannung und die Masse vertauscht sein, so dass die Motoranschlüsse über den Versorgungsspannungsanschluss kurz geschlossen werden. Dies führt zu einem Abbremsen des Motors, wie dies bei den Ansteuerschaltungen mit mechanischen Umschaltkontakten der Fall ist.

Die erfindungsgemäße Ansteuerschaltung ist selbstverständlich auch mit mechanischen Relais ausführbar, wobei jedes Relais einen einfachen Einschaltkontakt aufweist, der im Ruhezustand geöffnet ist. Vorzugsweise sind die vier Schaltbauelemente jedoch Halbleiterschaltbauelemente, beispielsweise Leistungsbipolartransistoren oder Leistungs-FETs.

Bei einer bevorzugten Ausführungsform umfasst der Energiespeicher einen Kondensator. Selbstverständlich ist auch eine Parallelschaltung mehrerer Kondensatoren möglich. Ein Anschluss des Kondensators ist mit Masse gekoppelt (entweder direkt oder beispielsweise über einen Widerstand). Der andere Anschluss des Kondensators ist mit der Versorgungsspannung oder mit einer von der Versorgungsspannung abgeleiteten Spannung gekoppelt, beispielsweise mit einer geregelten Spannung, die auch die Steuerschaltung versorgt. Der mit der Versorgungsspannung oder mit der von der Versorgungsspannung abgeleiteten Spannung gekoppelte Anschluss des Kondensators (oder der parallel geschalteten Kondensatoren) ist dann vorzugsweise über ein fünftes Schaltbauelement mit den Steueranschlüssen des zweiten und des vierten Schaltbauelements gekoppelt, wobei das fünfte Schaltbauelement eingeschaltet ist, wenn die Versorgungsspannung ausfällt. Das fünfte Schaltbauelement umfasst beispielsweise zwei Schaltbauelemente, die jeweils direkt zwischen dem Anschluss des Kondensators und einem Steueranschluss des zweiten oder vierten Schaltbauelements eingekoppelt sind. Bei einer bevorzugten Ausführungsform ist das fünfte Schaltbauelement ein einziger Schalter, der zwischen dem Anschluss des Kondensators und einem Schaltungsknoten eingekoppelt ist, wobei der Schaltungsknoten über jeweils eine Diode oder einen Gleichrichter mit den Steueranschlüssen des zweiten und vierten Schaltbauelements gekoppelt ist.

Das fünfte Schaltbauelement ist vorzugsweise ein im Ruhezustand eingeschaltetes Halbleiterschaltbauelement, das einen Steueranschluss aufweist, der mit der Versorgungsspannung gekoppelt ist. Dieses im Ruhezustand eingeschaltete Halbleiterschaltbauelement ist beispielsweise ein FET vom Verarmungstyp mit einem im Ruhezustand leitfähigen Kanal zwischen Source und Drain.

Der Steueranschluss des fünften Schaltbauelements könnte beispielsweise direkt mit der Versorgungsspannung oder mit einer von der Versorgungsspannung abgeleiteten Spannung gekoppelt sein. Bei einer bevorzugten Ausführungsform ist der Steueranschluss jedoch über ein sechstes Schaltbauelement mit der Spannungsversorgung gekoppelt, wobei ein Steueranschluss des sechsten Schaltbauelements mit der Steuerschaltung gekoppelt ist. Dies ermöglicht ein zusätzliches Einwirken der Steuerschaltung, beispielsweise eines Mikrocontrollers, auf die Kopplung des Steueranschlusses des fünften Schaltbauelements mit der Versorgungsspannung und somit eine zusätzliche Möglichkeit der Motorbremsung durch ein Steuersignal der Steuerschaltung. Vorzugsweise ist die Steuerschaltung ein Mikrocontroller, der bei einem Rücksetzen das sechste Schaltbauelement vorübergehend ausschaltet. So führt beispielsweise ein Rücksetzen des Mikrocontrollers zu einer vorübergehenden Wegnahme des Ausgangssignals an dem mit dem Steueranschluss des sechsten Schaltbauelements gekoppelten Ausgangsports des Mikrocontrollers. Das Rücksetzen löst somit eine Motorbremsung aus.

Vorteilhafte und/oder bevorzugte Weiterbildungen der Erfindung sind in den Unteransprüchen gekennzeichnet.

Im Folgenden wird die Erfindung anhand eines in den Zeichnungen dargestellten bevorzugten Ausführungsbeispiels näher erläutert. In den Zeichnungen zeigen:
Figur 1 ein Schaltbild einer herkömmlichen Ansteuerschaltung mit einer H-Brücke aus vier von einer Steuerschaltung angesteuerten Schaltbauelementen;
Figur 2 ein bevorzugtes Ausführungsbeispiel einer erfindungsgemäßen Ansteuerschaltung, bei der die in Figur 1 gezeigte Ansteuerschaltung durch eine Motorbremsschaltung ergänzt ist; und
Figur 3 ein alternatives Ausführungsbeispiel einer erfindungsgemäßen Ansteuerschaltung.

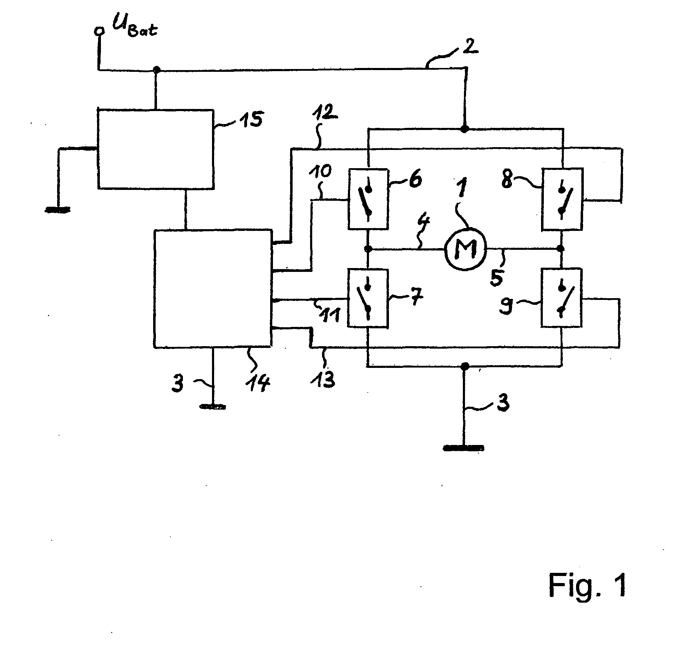

Figur 1 zeigt eine herkömmliche Ansteuerschaltung für einen Antriebsmotor 1 eines Stellantriebs, bei dem ein von dem Motor 1 angetriebenes Getriebebauteil gegen einen mechanischen Endanschlag bewegbar ist. Die Ansteuerschaltung dient dazu, den Motor 1 derart zwischen einer Versorgungsspannung 2 und einer Masse 3 einzukoppeln, dass sich dieser entweder in einer ersten oder in einer entgegengesetzten zweiten Richtung bewegt, so dass über ein Getriebe ein mechanisches Bauteil entweder in einer ersten oder in einer entgegengesetzten zweiten Richtung bewegt wird. Bei der Anwendung in einer elektronischen Lenkungsverriegelung bedeutet dies beispielsweise, dass der Motor 1 einen Sperrbolzen in eine Verriegelungsrichtung oder in eine Entriegelungsrichtung bewegt. Die Ansteuerschaltung gemäß Figur 1 weist eine H-Brücke auf, bei der sich im mittleren Zweig der Motor 1 mit den beiden Anschlüssen 4 und 5 befindet, wobei ein erstes Schaltbauelement 6 einen ersten Anschluss 4 des Motors 1 mit der Versorgungsspannung 2, ein zweites Schaltbauelement 7 den ersten Anschluss 4 mit Masse 3, ein drittes Schaltbauelement 8 den zweiten Anschluss 5 des Motors 1 mit der Versorgungsspannung 2 und ein viertes Schaltbauelement 9 den zweiten Anschluss 5 des Motors 1 mit Masse 3 koppeln kann. Die vier Schaltbauelemente 6, 7, 8 und 9 weisen vier Steueranschlüsse 10, 11, 12 bzw. 13 auf, die mit Ausgabe-Ports (Anschlüssen) einer Steuerschaltung, hier eines Mikrocontrollers 14 gekoppelt sind. Der Mikrocontroller 14 steuert die vier Steueranschlüsse der vier Schaltbauelemente 6 - 9 so an, dass im Ruhezustand sämtliche vier Schalter geöffnet sind. Um den Motor in einer ersten Richtung anzutreiben, steuert der Mikrocontroller 14 die Steueranschlüsse 10 und 13 des ersten und vierten Schaltbauelements 6, 9, und um den Motor in der entgegengesetzten, zweiten Richtung anzutreiben, steuert der Mikrocontroller 14 die Steueranschlüsse 11 und 12 des zweiten und dritten Schaltbauelements 7, 8 an. Auf jeden Fall muss vermieden werden, dass die Steueranschlüsse 10 und 11 des ersten und zweiten Schaltbauelements 6 und 7 und/oder die Steueranschlüsse 12 und 13 des dritten und vierten Schaltbauelements 8 und 9 gleichzeitig angesteuert werden, weil dies zu einem die Bauelemente zerstörenden Kurzschluss zwischen der Versorgungsspannung 2 und der Masse 3 führen würde.
Figur 1 zeigt noch eine zwischen der Versorgungsspannung 2 und dem Spannungsversorgungsanschluss des Mikrocontrollers 14 eingekoppelte Spannungsreglerschaltung 15, die zur Aufrechterhaltung einer gewünschten geregelten Versorgungsspannung für den Mikrocontroller 14 dient.

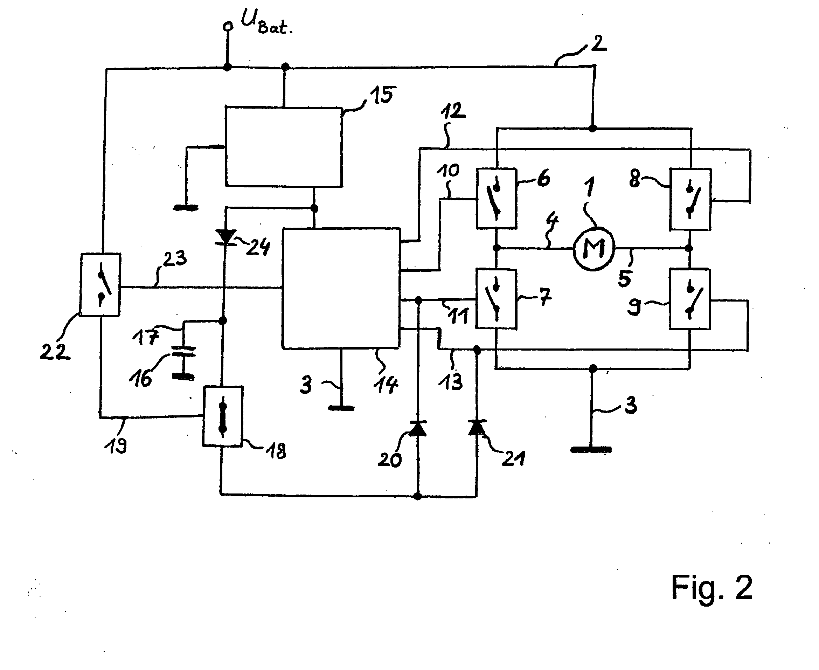

Figur 2 zeigt die erfindungsgemäße Weiterbildung der in Figur 1 gezeigten bekannten Schaltungsanordnung. In Figur 2 sind zunächst diejenigen Bauelemente mit denselben Bezugszeichen enthalten, die bereits oben anhand von Figur 1 näher beschrieben worden sind. Zusätzlich sind die Steueranschlüsse 11 und 13 des zweiten und vierten Schaltbauelements 7 und 9 über ein fünftes Schaltbauelement 18 mit einem Anschluss 17 eines Kondensators 16 verbunden. Das fünfte Schaltbauelement 18 ist im Ruhezustand eingeschaltet und verbindet somit den Kondensator 16 mit den Steueranschlüssen 11 und 13. Um für die erforderliche Entkopplung der Steueranschlüsse 11 und 13 zu sorgen, ist das fünfte Schaltbauelement 18 nicht direkt, sondern über zwei Dioden 20 und 21 mit den Steueranschlüssen 11 und 13 gekoppelt. Der mit dem fünften Schaltbauelement 18 gekoppelte Anschluss 17 des Kondensators 16 ist darüber hinaus mit der von der Spannungsreglerschaltung 15 zur Verfügung gestellten geregelten Versorgungsspannung gekoppelt. Bei eingeschalteter Versorgungsspannung führt dies zu einem Aufladen des Kondensators 16 auf die geregelte Versorgungsspannung. In den Verbindungszweig zwischen dem Spannungsregler 15 und dem Anschluss 17 des Kondensators 16 ist eine Diode 24 in Durchlassrichtung eingekoppelt. Dadurch wird vermieden , dass der Kondensator 16 bei Ausfall der Versorgungsspannung den Mikrocontroller weiterversorgt.

Ein Steueranschluss 19 des fünften Schaltbauelements 18 ist über ein sechstes Schaltbauelement 22 mit der Versorgungsspannung 2 gekoppelt. Ein Steueranschluss 23 des sechsten Schaltbauelements 22 ist mit einem Ausgangs-Port des Mikrocontrollers 14 gekoppelt.

Wird eine Versorgungsspannung 2 angelegt, so legt der Mikrocontroller 14 nach Ablauf eines Rücksetzvorgangs ein Signal an den Steueranschluss 23 des sechsten Schaltbauelements 22 an, welches dann geschlossen wird. Dies führt dazu, dass die Versorgungsspannung 2 an den Steueranschluss 19 des fünften Schaltbauelements 18 angelegt wird, was zu einem Öffnen des Schaltbauelements führt. Durch das Öffnen des Schaltbauelements 18 wird die von dem Spannungsregler 15 zur Verfügung gestellte geregelte Versorgungsspannung nicht mehr an die Steueranschlüsse 11 und 13 angelegt. Gleichzeitig bleibt der Kondensator 16 mit der geregelten Versorgungsspannung gekoppelt und aufgeladen. Der Mikrocontroller 14 kann dann in der üblichen Weise mit Hilfe seiner vier herkömmlichen Ausgangs-Ports die vier Steueranschlüsse 10 bis 13 der vier Schaltbauelemente 6 bis 9 ansteuern, so dass der Motor in der gewünschten Weise vor- und zurückbewegt wird.

Kommt es zu einem plötzlichen Ausfall der Versorgungsspannung 2, während der Motor 1 in Bewegung ist, so fällt kurz danach auch die geregelte Versorgungsspannung des Mikrocontrollers 14 aus, woraufhin dieser sämtliche Steuersignale an die vier Steueranschlüsse 10 bis 13 wegnimmt. Gleichzeitig kommt es zu einem Abfall der Steuerspannung am Steueranschluss 19 des fünften Schaltbauelements 18, welches somit geschlossen wird. Das fünfte Schaltbauelement 18 koppelt dann den Anschluss 17 des Kondensators 16 über die Dioden 20 und 21 mit den Steueranschlüssen 11 und 13 der Schaltbauelemente 7 und 9, so dass diese geschlossen werden und die beiden Motoranschlüsse 4 und 5 jeweils mit Masse 3 koppeln. Dies führt zu einem schnellen Abbremsen des Motors 1.

Auch dann, wenn die Versorgungsspannung 2 nicht ausfällt, der Mikrocontroller aber aus irgendeinem Grund zurückgesetzt wird, nimmt dieser vorübergehend das Steuersignal von dem Steueranschluss 23 des sechsten Schaltbauelements 22 weg, so dass das sechste Schaltbauelement vorübergehend geöffnet wird. Dadurch wird die Steuerspannung am Steueranschluss 19 des fünften Schaltbauelements 18 vorübergehend weggenommen. Dies führt zu einem Schließen des fünften Schaltbauelements 18, welches dann den geladenen Kondensator 16 mit den Steueranschlüssen 11 und 13 koppelt. Dadurch werden die beiden Motoranschlüsse 4 und 5 mit Masse gekoppelt und wird der Motor 1 schnell abgebremst. Nach dem Ende des Rücksetzvorgangs wird das Steuersignal wieder an den Steueranschluss 23 des sechsten Schaltbauelements 22 angelegt, somit das sechste Schaltbauelement geschlossen und die Versorgungsspannung 2 an den Steueranschluss 19 des fünften Schaltbauelements 18 angelegt. Dadurch öffnet das fünfte Schaltbauelement 18 und wird das parallele Anlegen der Steuerspannung an die Steueranschlüsse 11 und 13 beendet.

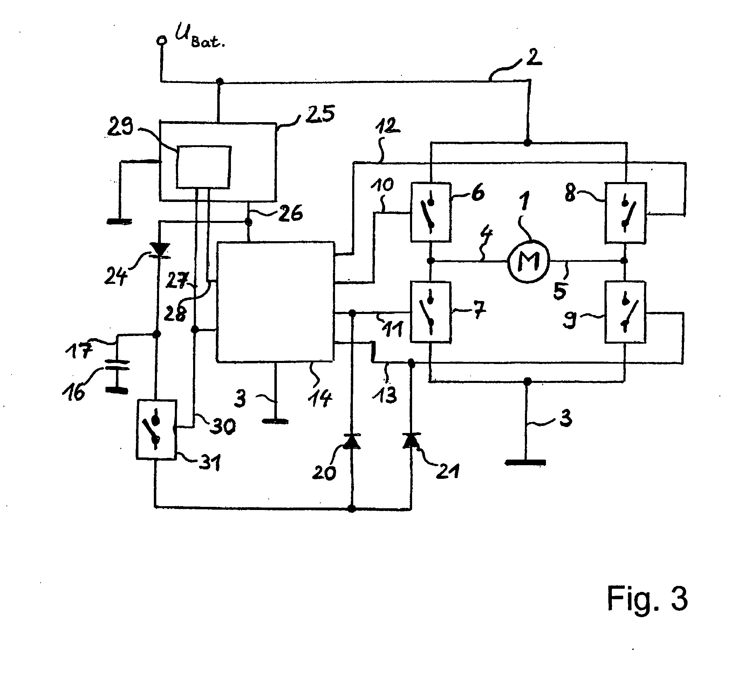

Bei dem in Figur 3 dargestellten alternativen Ausführungsbeispiel ist die Spannungsversorgungsschaltung 15 des Ausführungsbeispiels gemäß Figur 2 durch eine Spannungsversorgungsschaltung 25 ersetzt, welche zudem eine Watchdog-Schaltung 29 enthält. Über eine Leitung 26 versorgt die Spannungsversorgungsschaltung 25 zunächst den Mikrocontroller 14 mit einer Versorgungsspannung. Außerdem wird über die Diode 24 wiederum der Kondensator 16 aufgeladen. Die in der Spannungsversorgungsschaltung integrierte Watchdog-Schaltung 29 überwacht die ordnungsgemäße Funktion des Mikrocontrollers und das ordnungsgemäße Anliegen der Versorgungsspannung. Damit sie den Mikrocontroller überwachen kann, sendet dieser über eine Leitung 28 in regelmäßigen Abständen ein Signal an die Watchdog-Schaltung 29. Sollte aufgrund einer Fehlfunktion des Mikrocontrollers dieses auf Leitung 28 in regelmäßigen Abständen angelegte Signal für eine längere Zeitdauer ausbleiben, so wird das Überschreiten einer vorgegebenen Zeit von der Watchdog-Schaltung 29 erfasst, woraufhin diese auf Leitung 27 ein Rücksetzsignal an den Mikrocontroller 14 anlegt. Durch das Rücksetzsignal auf Leitung 27 wird der Mikrocontroller 14 wieder in einen definierten Zustand zurückgebracht. Gleichzeitig wird das Rücksetzsignal auf Leitung 27 über eine Leitung 30 an einen Schalter 31 angelegt, der beim Anliegen des Rücksetzsignals geschlossen wird. Über den geschlossenen Schalter 31 entlädt sich dann der Kondensator 16 derart, dass die Schalter 7 und 9 geschlossen werden, so dass der Motor 1 abgebremst wird. Das Rücksetzsignal der Watchdog-Schaltung 29 bringt somit nicht nur den Mikroprozessor in einen definierten Zustand, sondern sorgt darüber hinaus auch für ein Abbremsen des Motors 1.

Die Watchdog-Schaltung 29 erzeugt das Rücksetzsignal auf Leitung 27 auch dann, wenn sie einen Abfall der Versorgungsspannung 2 feststellt. Somit wird der Schalter 31 auch dann geschlossen, wenn ein Abfall der Versorgungsspannung festgestellt wird. Wenn die Versorgungsspannung vollständig wegfällt, so muss selbstverständlich dafür gesorgt werden, dass der Schalter 31 dennoch für einen für eine Motorbremsung ausreichenden Zeitraum geschlossen bleibt. Das Rücksetzsignal auf Leitung 27 und auf Leitung 30 muss deshalb für diese Mindestzeitdauer auch dann angelegt bleiben, wenn die Versorgungsspannung 2 vollständig ausfällt. Zu diesem Zweck enthält die Watchdog-Schaltung 29 ebenfalls einen Energiespeicher, beispielsweise in Form einer Kapazität, der für eine Aufrechterhaltung des Rücksetzsignals auf Leitungen 27 und 30 auch dann sorgt, wenn die Versorgungsspannung schlagartig auf Null abfällt.

## Patentansprüche

1. Ansteuerschaltung für einen Antriebsmotor (1) eines Stellantriebs in einem Kraftfahrzeug, insbesondere eines Stellantriebs einer Lenkungsverriegelung, bei dem ein von dem Motor (1) angetriebenes Getriebebauteil gegen einen mechanischen Endanschlag bewegbar ist,
wobei der Motor (1) ein Gleichstrommotor mit zwei Anschlüssen (4, 5) ist,
wobei die Ansteuerschaltung vier von einer Steuerschaltung (14) angesteuerte Schaltbauelemente (6 - 9) aufweist, wobei ein erstes Schaltbauelement (6) einen ersten Anschluss (4) des Motors (1) mit einer Versorgungsspannung (2), ein zweites Schaltbauelement (7) den ersten Anschluss (4) des Motors (1) mit Masse (3), ein drittes Schaltbauelement (8) einen zweiten Anschluss (5) des Motors (1) mit der Versorgungsspannung (2) und ein viertes Schaltbauelement (9) den zweiten Anschluss (5) des Motors (1) mit Masse (3) koppelt,
wobei die Schaltbauelemente (6 - 9) jeweils einen Steueranschluss (10 - 13) aufweisen und bei fehlender Ansteuerung des Steueranschlusses (10 - 13) durch eine Steuerspannung ausgeschaltet sind und
wobei die Steuerschaltung (14) eine Steuerspannung an die Steueranschlüsse (10, 13) des ersten und des vierten Schaltbauelements (6, 9) anlegt, um den Motor (1) in einer ersten Richtung anzutreiben, und die Steuerschaltung (14) die Steuerspannung an die Steueranschlüsse (11, 12) des zweiten und des dritten Schaltbauelements (7, 8) anlegt, um den Motor (1) in einer entgegengesetzten, zweiten Richtung anzutreiben,
**dadurch gekennzeichnet,**
**dass** eine Motorbremsschaltung (16 - 23) vorgesehen ist, die die Steueranschlüsse (11, 13) des zweiten und des vierten Schaltbauelements (7, 9) vorübergehend mit einer Steuerspannung zum Einschalten der Schaltbauelemente (7, 9) versorgt, sobald die Versorgungsspannung (2) ausfällt, wobei die Steuerspannung aus einem Energiespeicher (16) gewonnen wird, der während des Anliegens der Versorgungsspannung (2) aufgeladen wird,
wobei der Energiespeicher einen Kondensator (16) umfasst, der mit einem Anschluss mit Masse (3) und mit einem weiteren Anschluss (17) mit der Versorgungsspannung (2) oder einer von der Versorgungsspannung (2) abgeleiteten Spannung gekoppelt ist, und
der mit der Versorgungsspannung oder der von der Versorgungsspannung abgeleiteten Spannung gekoppelte Anschluss (17) des Kondensators (16) über ein fünftes Schaltbauelement (18) mit den Steueranschlüssen (11, 13) des zweiten und des vierten Schaltbauelements (7, 9) gekoppelt ist, wobei das fünfte Schaltbauelement (18) eingeschaltet ist, wenn die Versorgungsspannung (2) ausfällt.

2. Ansteuerschaltung nach Anspruch 1, **dadurch gekennzeichnet, dass** die vier Schaltbauelemente (6 - 9) Halbleiterschaltbauelemente sind.

3. Ansteuerschaltung nach Anspruch 1, **dadurch gekennzeichnet, dass** das fünfte Schaltbauelement (18) ein im Ruhezustand eingeschaltetes Halbleiterschaltbauelement ist und einen Steueranschluss (19) aufweist, der mit der Versorgungsspannung (2) gekoppelt ist.

4. Ansteuerschaltung nach Anspruch 3, **dadurch gekennzeichnet, dass** der Steueranschluss (19) des fünften Schaltbauelements (18) über ein sechstes Schaltbauelement (22) mit der Spannungsversorgung (2) gekoppelt ist, wobei ein Steueranschluss (23) des sechsten Schaltbauelements (22) mit der Steuerschaltung (14) gekoppelt ist.

5. Ansteuerschaltung nach Anspruch 4, **dadurch gekennzeichnet, dass** die Steuerschaltung ein Mikrocontroller (14) ist, der bei einem Rücksetzen das sechste Schaltbauelement (22) vorübergehend ausschaltet.

## Claims

1. A control circuit for a driver motor (1) of an actuator in a motor vehicle, particularly an actuator of a steering lock, in which a transmission component driven by the motor (1) is movable against a mechanical end stop, wherein the motor (1) is a D.C. motor with two connections (4, 5), wherein the control circuit includes four switching components (6-9) controlled by a control circuit (14), wherein a first switching component (6) connects a first connection (4) of the motor (1) to a supply voltage (2), a second switching component (7) connects the first connection (4) of the motor (1) to ground (3), a third switching component (8) connects a second connection (5) of the motor (1) to the supply voltage (2) and a fourth switching component (9) connects the second connection (5) of the motor (1) to ground (3), wherein the switching components (6-9) have a respective control connection (10-13) and are switched off when there is no activation of the control connection (10-13) by a control voltage and wherein the control circuit (14) applies a control voltage to the control connections (10, 13) of the first and the fourth switching components (6, 9) in order to drive the motor (1) in a first direction and the control circuit (14) applies the control voltage to the control connections (11, 12) of the second and the third switching components (7, 8) in order to drive the motor (1) in an opposite, second direction, **characterised in that** a motor braking circuit (16, 23) is provided which temporarily supplies the control connections (11, 13) of the second and the fourth switching components (7, 9) with a control voltage to switch the switching components (7, 9) on as soon as the supply voltage (2) fails, wherein the control voltage is produced from an energy store (16), which is charged up whilst the supply voltage (2) is applied, wherein the energy store includes a capacitor (16), which is connected with one connection to ground (3) and with a further connection (17) to the supply voltage (2) or a voltage derived from the supply voltage (2) and the connection (17) of the capacitor (16), which is connected to the supply voltage or the voltage derived from the supply voltage is connected via a fifth switching component (18) to the control connections (11, 13) of the second and the fourth switching components (7, 9), wherein the fifth switching component (18) is switched on when the supply voltage (2) fails.

2. A control circuit as claimed in claim 1, **characterised in that** the four switching components (6-9) are semi-conductor switching components.

3. A control circuit as claimed in claim 1, **characterised in that** the fifth switching component (18) is a semi-conductor switching component, which is switched on in the rest state and has a control connection (19), which is connected to the supply voltage (2).

4. A control circuit as claimed in claim 3, **characterised in that** the control connection (19) of the fifth switching component (18) is connected via a sixth switching component (22) to the supply voltage (2), wherein a control connection (23) of the sixth switching component (22) is connected to the control circuit (14).

5. A control circuit as claimed in claim 4, **characterised in that** the control circuit is a microcontroller (14), which switches off temporarily on resetting of the sixth switching component (22).

## Revendications

1. Circuit de commande pour un moteur de commande (1) d'un mécanisme de commande dans un véhicule automobile, en particulier un mécanisme de commande d'un verrouillage de direction, dans lequel un composant de transmission entraîné par le moteur (1) peut être déplacé par rapport à une butée mécanique de fin de course,
dans lequel le moteur (1) est un moteur à courant
continu avec deux bornes (4, 5), dans lequel le circuit de commande présente quatre composants de circuit (6 à 9) commandés par un circuit de commande (14), dans lequel un premier composant de commutation (6) couple une première borne (4) du moteur (1) à une tension d'alimentation (2), un deuxième composant de commutation (7) couple la première borne (4) du moteur (1) à la masse (3), un troisième composant de commutation (8) couple une deuxième borne (5) du moteur (1) à la tension d'alimentation (2) et un quatrième composant de commutation (9) couple la deuxième borne (5) du moteur (1) à la masse (3),
dans lequel les composants de commutation (6 à 9)
présentent respectivement une borne de commande (10 à 13) et, dans le cas d'une commande défaillante de la borne de commande (10 à 13) sont commutés par une tension de commande,
dans lequel le circuit de commande (14) applique une
tension de commande aux bornes de commande (10, 13) des premier et quatrième composants de commutation (6, 9) pour entraîner le moteur (1) dans un premier sens et le circuit de commande (14) applique la tension de commande aux bornes de commande (11, 12) des deuxième et troisième composants de commutation (7, 8) pour entraîner le moteur (1) dans un second sens opposé,
**caractérisé en ce que**
il est prévu un circuit de frein moteur (16 à 23), qui
alimente les bornes de commande (11, 13) des deuxième et quatrième composants de commutation (7, 9) momentanément avec une tension de commande pour connecter les composants de commutation (7, 9), aussitôt que la tension d'alimentation (2) est défaillante, dans lequel la tension de commande est tirée d'un accumulateur (16) qui est chargé au cours de l'application de la tension d'alimentation (2),
dans lequel l'accumulateur comprend un
condensateur (16) qui est couplé par une borne à la masse (3) et par une autre borne (17) à la tension d'alimentation (2) ou à une tension dérivée de la tension d'alimentation (2), et
la borne (17) du condensateur (16) couplée à la
tension d'alimentation ou à la tension dérivée de la tension d'alimentation est couplée via un cinquième composant de commutation (18) aux bornes de commande (11, 13) des deuxième et quatrième composants de commande (7, 9), dans lequel le cinquième composant de commutation (18) est connecté lorsque la tension d'alimentation (2) est défaillante.

2. Circuit de commande selon la revendication 1, **caractérisé en ce que** les quatre composants de commutation (6 à 9) sont des composants de commutation à semi-conducteurs.

3. Circuit de commande selon la revendication 1, **caractérisé en ce que** le cinquième composant de commutation (18) est un composant de commutation à semi-conducteurs connecté à l'état de repos et présente une borne de commande (19), qui est couplée à la tension d'alimentation (2).

4. Circuit de commande selon la revendication 3, **caractérisé en ce que** la borne de commande (19) du cinquième composant de commutation (18) est couplée via un sixième composant de commutation (22) à l'alimentation de tension (2), dans lequel une borne de commande (23) du sixième composant de commutation (22) est couplée au circuit de commande (14).

5. Circuit de commande selon la revendication 4, **caractérisé en ce que** le circuit de commande est un microcontrôleur (14) qui déclenche momentanément le sixième composant de commutation (22) dans le cas d'une remise à zéro.
